# FASCICULE DE BREVET EUROPEEN

(11) **EP 2 644 345 B1**
(45) Date de publication et mention de la délivrance du brevet: **25.03.2015**
(21) Numéro de dépôt: 12161710.4
(22) Date de dépôt: 28.03.2012
(51) Int. Cl.: B29B 11/14, B29C 49/06, B65D 23/10

(54) **Préforme pour la confection d'un récipient en matière plastique avec poignée intégrée ainsi que méthode de réalisation d'un tel récipient**
Vorformling für die Herstellung eines Kunststoffbehälters mit integriertem Griff sowie Verfahren zur Herstellung eines solchen Kunststoffbehälters
Preform for manufacturing a plastic container with integrated handle and method for manufacturing such a plastic container

(43) Date de publication de la demande: 02.10.2013
(73) Titulaire: Incoplas Services, 1170 Bruxelles (BE)
(72) Inventeur: Della Riva, Carlo, 1170 Bruxelles (BE)
(74) Mandataire: Decamps, Alain René François

(56) Documents cités:
- EP-A1- 0 732 187
- WO-A1-00/51902
- WO-A1-2006/000225

## Description

### Domaine de l'invention

L'invention se rapporte à la fabrication de récipients en plastiques bi-orientés.

L'invention concerne plus précisément de tels récipients munis de poignées permettant une manipulation plus aisée.

### État de la technique

Pour certains types de produits de consommation, qui requièrent par exemple le versage de liquides ou de poudres à partir de grands conditionnements (produits de lavage, de rinçage, etc.) la présence d'une poignée est absolument indispensable. On est donc obligé soit d'utiliser des techniques de moulage requérant des quantités de matériaux plastiques plus importantes, et donc préjudiciables pour l'environnement, soit de rajouter des poignées a posteriori, ce qui grève les prix de production.

Le mode de fabrication de récipients en plastiques bi-orientés, réalisés à partir d'une préforme, permet d'obtenir à partir de plastiques divers des récipients dotés de qualités de résistance extrêmement élevées, ce qui économise d'autant les quantités mises en jeu. Malheureusement, ce mode de fabrication rend très complexe l'obtention de poignées intégrées, à l'inverse des méthodes de moulage plus classiques.

Il est en effet très difficile à l'heure actuelle d'introduire une « réserve » dans le moule pendant que la paroi de la préforme se distend, sauf à passer par des moules complexes (et donc coûteux) tels que décrit dans US 2011/0064899, US 2004/0108627 et/ou des moulages en plusieurs phases comme montrés dans WO 2007/101309, EP 1 510 319 ou WO2005/042230.

Dans US 6 454 110, deux poignées sont réalisées à partir de la bague d'une préforme. Elles sont cependant de dimensions limitées, encombrantes durant la fabrication et interfèrent avec l'opération de versage.

WO 2006/000225 et EP 0 732 187 concernent tous les deux des préformes dont la poignée est intégrée au niveau de la bague de la préforme. La poignée d'EP 0 732 187 n'est pas déployable depuis la bague.

La poignée de WO 2006/000225, considérée comme le plus proche état de la technique, est formée par le déploiement de la bague et se présente comme une chaîne d'anneaux ou boucles. Il en résulte que ces anneaux juxtaposés sont de relativement petit diamètre rendant de ce fait la préhension du récipient difficile.

### Résumé de l'invention

Un but de l'invention est de pouvoir mettre sur le marché des récipients bénéficiant des propriétés mécaniques des matériaux plastiques bi-orientés.

Un autre but de l'invention est de limiter les quantités de matières utilisées, ce qui a toujours un impact favorable sur l'environnement.

Un autre but de l'invention est d'obtenir un tel récipient ne nécessitant pas ou peu d'investissement dans les machines et les procédés d'injection, et en conséquence peu coûteux à fabriquer.

Un autre but de l'invention est la mise à disposition des consommateurs de récipients facile à manipuler, même en grands conditionnements.

L'objet de l'invention est une préforme pour la confection d'un récipient en plastique bi-orienté comme décrit dans la revendication 1.

Un grand avantage de cette préforme est sa compacité, qui rend possible le transport de grandes quantités sous un faible volume, sans risque d'entremêlée et avec donc un nombre de déchets réduit.

Suivant un mode de réalisation préféré, le premier et le deuxième segment s'étendent à l'opposé l'un de l'autre autour de la bague suivant un arc d'environ 175° autour de cette bague et se raccordent l'un à l'autre via un troisième segment. Ce dernier s'étend en formant un arc d'environ 360° autour de la bague et se rattache en U à ces premier et deuxièmes segments ; les extrémités libres des premier et deuxième segments se raccordent du même côté de la bague de la préforme.

Le troisième segment présente avantageusement une largeur supérieure à celle des premier et deuxième segments.

Suivant une autre forme de réalisation avantageuse, le premier et le deuxième segment s'étendent suivant un arc de près de 360° autour de la bague et se rattachent côte à côte d'un même côté de la bague.

Suivant une autre forme de réalisation avantageuse, le premier segment s'étend suivant un arc d'environ 175° autour de la bague et se raccorde en U au deuxième segment, lequel s'étend en formant un arc d'environ 360° autour de cette bague; l'extrémité libre de ce deuxième segment se rattache à la bague à l'opposé de l'extrémité libre du premier segment.

De préférence, au moins une partie d'un des segments présente une largeur supérieure, de façon à faciliter la préhension.

Les différents segments composant la poignée sont avantageusement reliés les uns aux autres par des liaisons temporaires à faible résistance. On limite ainsi notamment les problèmes de gauchissement lors du transport.

Suivant une forme de réalisation avantageuse, la poignée est réalisée en matériaux plastiques de nature différentes du reste de la préforme.

Un autre objet de l'invention est une méthode de réalisation d'un récipient en matériau plastique bi-orienté avec poignée intégrée à partir d'une préforme telle que décrite ci-dessus, qui comprend les opérations suivantes :
- Mouler des préformes suivant l'une quelconque des caractéristiques décrites ci-dessus ;
- Alimenter une machine de moulage-soufflage en préformes ;
- Effectuer un apport thermique à chacune des préformes ;
- Introduire chacune de ces préformes dans un moule en la maintenant par sa bague;
- Fermer chacun de ces moules ;
- Enfoncer un mandrin dans la préforme de façon à la déformer axialement ;
- Raccorder l'embouchure de chacune de ces préformes à une alimentation en gaz sous pression ;
- Déformer radialement la paroi du corps de chacune de ces préformes sous l'effet de la pression et de la chaleur jusqu'à en tapisser la paroi interne du moule;
- laisser refroidir et démouler le récipient obtenu ;

Suivant une forme de réalisation avantageuse, la méthode ci-dessus comprend en outre les opérations suivantes :
- Remplir le récipient et le boucher;
- Opérer une traction sur un segment externe de la collerette entourant la bague du récipient de façon à dérouler la poignée.

Suivant une autre forme de réalisation avantageuse, le moulage de la préforme est réalisé par bi-injection, la poignée étant moulée en un matériau plastique différent du corps de la préforme.

Un autre objet de l'invention est un récipient obtenu par la méthode décrite ci-dessus.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
La Fig.1 est une vue en perspective d'un premier mode de réalisation d'une préforme suivant l'invention ;
La Fig.2 est une vue en élévation de la préforme de la Fig. 1;
La Fig.3 est une vue en perspective de la préforme de la Fig. 1 pivotée de 90° ;
La Fig.4 est une vue en plan de la préforme de la Fig. 1;
La Fig.5 est une vue en perspective d'un autre mode de réalisation d'une préforme suivant l'invention ;
La Fig.6 est une vue en élévation de la préforme de la Fig. 5;
La Fig.7 est une vue en perspective de la préforme de la Fig. 5 pivotée de 90° ;
La Fig.8 est une vue en plan de la préforme de la Fig. 5;
La Fig.9 est une vue en plan d'un autre mode de réalisation d'une préforme suivant l'invention ;
La Fig. 10 est une vue schématique d'un récipient muni de sa poignée déployée ;
La Fig. 11 est une vue en plan d'une variante de la préforme de l'invention.

Les figures ne sont pas dessinées à l'échelle. Généralement, des éléments semblables sont dénotés par des références semblables dans les figures.

### Description détaillée de modes de réalisation particuliers

Comme on peut le voir sur l'ensemble des figures, la préforme de l'invention 1 reprend en gros les caractéristiques essentielles dictées par le mode de réalisation d'un récipient en matière plastique bi-orientée, à savoir une embouchure 2 pour le soufflage, destinée à devenir l'embouchure du futur récipient. Cette embouchure 2 est reliée via une bague 4 à un corps tubulaire 6 destiné à devenir, après étirement, le corps du récipient.

Suivant une technique de soufflage bien connue de l'homme du métier, après avoir été chauffée, la préforme est suspendue par sa bague dans un moule, elle subit une première déformation axiale qui l'étire en hauteur, après quoi un gaz sous pression est injecté au-travers de l'embouchure. La paroi du corps tubulaire se distant radialement et, en s'amincissant progressivement, s'étend jusqu'à la paroi interne du moule (non représenté), conférant au récipient sa forme définitive. La double déformation (axiale puis radiale) conférant à la matière plastique « bi-orientée » des qualités mécanique accrues, ce qui, par contrecoup, permettra d'utiliser des parois plus minces et donc de réduire les quantités de matériaux mis en jeu.

Parmi les matériaux plastiques susceptibles d'être utilisés sous une forme bi-orientée, on citera, sans que cette liste soit limitative, le PE, le PET, le PP, le PC, etc.

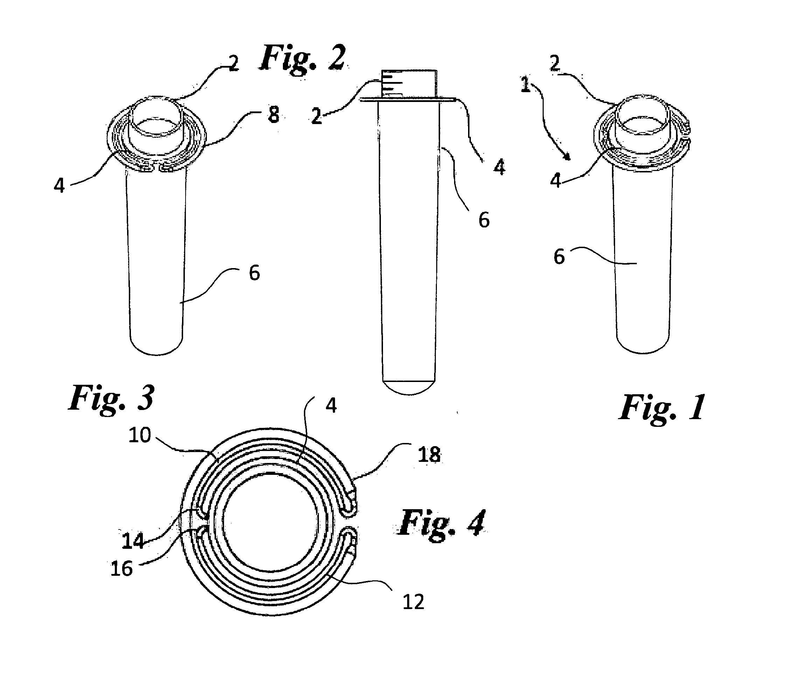

Une particularité de la préforme de l'invention tient à la forme particulière de la bague 4. Celle-ci, comme on peut le voir plus en détail notamment à la Fig.4, intègre une collerette 8 destinée à devenir une future poignée 8. Cette future poignée 8, grossièrement en forme de ruban, se compose d'un premier et d'un deuxième segment 10 et 12. Chacun de ces segments 10, 12 comprend une première extrémité 14, 16 raccordée à la bague 4 de la préforme 1. Ces segments 10, 12 forment chacun un arc de cercle qui s'étendent en sens contraire l'un de l'autre sur environ 175° autour de la bague 4, et se raccordent en U aux deux extrémités d'un troisième segment 18, lequel s'étend suivant un arc de cercle d'environ 350° à l'extérieur des deux premiers segments 10, 12.

Lorsque le récipient a atteint sa forme définitive et qu'il se retrouve dans le commerce, dûment rempli, scellé et muni de son bouchon, il suffit au consommateur d'opérer une traction sur le troisième segment pour voir la poignée 8 se déployer entièrement. En dépit de la minceur des rubans 10, 12, 18, cette poignée se révèle d'une résistance étonnante et permet de manipuler le récipient et son contenu avec aisance. On peut ainsi verser de l'huile dans le carter d'un moteur, transporter une tourie d'eau, etc.

Les avantages par rapport aux récipients connus de l'état de la technique sont nombreux et divers : le récipient et sa poignée forment un tout intégré, ce qui réduit la main d'oeuvre lors de la production. Il n'est plus nécessaire de mouler des pièces distinctes ni de les stocker pour munir le récipient de poignées. Les préformes sont à peine plus encombrantes que des préformes classiques et prennent donc peu de place. Elles n'ont pas de formes complexes comme par exemple dans WO 2005/042230et ne risquent donc pas de s'enchevêtrer entre elles. On notera plus particulièrement sur la Fig. 4 que le segment intermédiaire 18 est de diamètre légèrement supérieur aux autres de façon à ne pas blesser l'articulation des phalanges de l'utilisateur. Enfin, la longueur de la poignée, après déploiement, permet l'utilisation de coiffer le récipient d'un bouchon de relativement grandes dimensions.

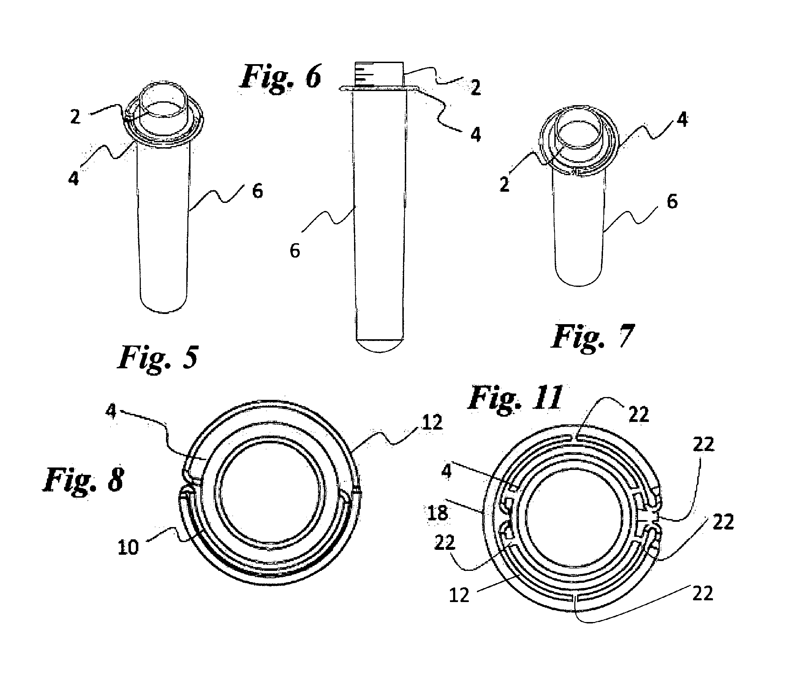

Les Fig. 5 à 8 montrent un autre mode de réalisation du récipient suivant l'invention. On n'a pas ici prévu de troisième segment distinct. Comme on peut le voir plus particulièrement à la Fig. 8, le premier segment 10 s'étend suivant un arc d'environ 175° autour de la bague4 et se raccorde en U au deuxième segment 12. Ce deuxième segment 12s'étend à son tour, en formant un arc d'environ 350° autour de la bague 4, son extrémité libre 20 se rattachant à la bague 4 à un point de jonction 22 placé diamétralement à l'opposé de l'extrémité libre du premier segment 10. Ce deuxième mode de réalisation, quoique plus court, permet de transporter le récipient en gardant son axe plus prêt de la verticale.

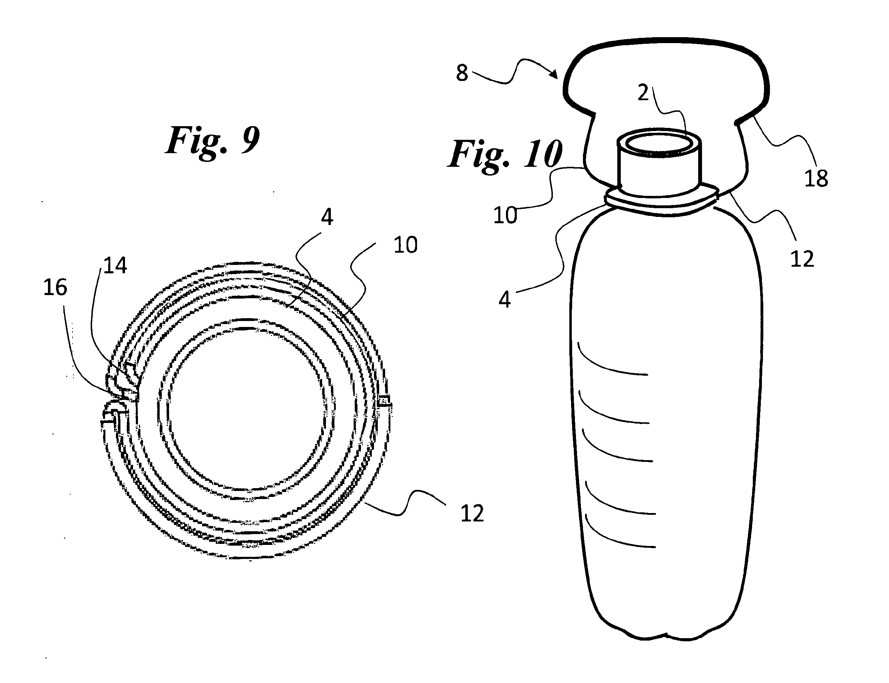

Suivant un mode de réalisation « intermédiaire », montré à la Fig. 9, un premier et le deuxième segment se raccordent côte à côte du même côté à la bague, comme pour le mode de réalisation montré aux Fig. 1 à 4, et s'étendent en parallèle suivant un arc d'environ 350°, se raccordant en U à l'extrémité de cet arc.

Un avantage de ces différents modes de réalisation est que la bague 4, dont une des fonctions est le maintien en place des préformes alimentant une machine de soufflage, peut être réduite, sa fonction continuant à être assurée par les segments de la future poignée, ce qui réduit l'ajout de matière par rapport à une préforme classique.

Les différents segments (10, 12, 18) composant la poignée 8 sont de préférence reliés les uns aux autres par des liaisons temporaires 22 à faible résistance, comme montré à la Fig.11, à la fois pour faciliter la répartition de la matière plastique dans les moules et pour prévenir des problèmes (arrachement de la poignée, gauchissement) lors du transport des préformes et/ou des récipients. Ces liaisons sont arrachées au moment où l'utilisateur entend faire usage de la poignée 8.

La Fig. 10 montre schématiquement un récipient muni d'une poignée suivant le mode de réalisation de la Fig.4 à l'état déployé.

Les opérations de moulage de la préforme et la réalisation du flacon proprement dit peuvent avoir lieu sur le même site de production, mais on conçoit que le rythme de production des machines impliquées peut être très différent. Par ailleurs, ces opérations peuvent être totalement dissociées géographiquement. Il faut donc prévoir un stockage des préformes. A cet égard, les préformes de l'invention présentent un énorme avantage par rapport à celles que l'on trouve dans l'état de la technique en raison de leur compacité : l'encombrement de la collerette 8 est à peine supérieur à celui de la bague d'une préforme classique. En outre, le risque d'entremêlement de préformes stockées en vrac est pratiquement négligeable (au contraire de ce qui se passe avec des préformes telles que décrites dans US 6 454 110).

On remarquera par ailleurs que, grâce à la bi-injection, il est possible de réaliser, sans solution de continuité, une préforme où la poignée est en un matériau plastique de nature différente du reste de la préforme.

Il apparaîtra évident pour l'homme du métier que la présente invention n'est pas limités aux exemples illustrés et décrits ci-dessus. L'invention comprend chacune des caractéristiques nouvelles ainsi que leur combinaison. La présence de numéros de référence ne peut être considérée comme limitative. L'usage du terme « comprend » ne peut en aucune façon exclure la présence d'autres éléments autres que ceux mentionnés. L'usage de l'article défini « un » pour introduire un élément n'exclut pas la présence d'une pluralité de ces éléments. La présente invention a été décrite en relation avec des modes de réalisations spécifiques, qui ont une valeur purement illustrative et ne doivent pas être considérés comme limitatifs.

## Revendications

1. Une préforme(1) pour la confection d'un récipient en plastique bi-orienté comprenant une embouchure (2) montée sur une bague (4), la dite embouchure (2) étant destinée à former, après soufflage, l'embouchure du récipient, et, à l'opposé de l'embouchure (2), un corps tubulaire (6) destiné à devenir, après étirement, le corps du récipient,
**caractérisée en ce que** la bague (4) de cette préforme(1) comprend un ruban continu apte à être déployé de façon à former une poignée (8) à une seule boucle pour le futur récipient, ce ruban étant doté de deux extrémités (14, 16), ces deux extrémités (14, 16) étant fixées à la bague de la préforme (4), le dit ruban comprenant un premier segment (10) raccordé à la bague(4) de la préforme(1)et s'étendant concentriquement à cette bague en formant un arc d'au moins 175° autour de la bague et un deuxième segment (12), abouté au premier segment (10), plié en U par rapport à ce premier segment (10), s'étendant en formant un arc d'au moins 175° autour de cette bague (4), l'extrémités libres (14, 16) de ce deuxième segment se raccordant à la bague(4) de la préforme (1).

2. Une préforme selon la revendication 1, **caractérisée en ce que** le premier (10) et le deuxième segment (12) s'étendent à l'opposé l'un de l'autre autour de la bague (4) suivant un arc d'environ 175° autour de cette bague(4) et se raccordent l'un à l'autre via un troisième segment (18), lequel s'étend en formant un arc d'environ 360° autour de cette bague(4) et se rattache en U à ces premier (10) et deuxièmes (12) segments, les extrémités libres (14, 16) des premier (10) et deuxième (12) segments se raccordant du même côté de la bague(4) de la préforme (1).

3. Une préforme selon la revendication 2, **caractérisée en ce que** le troisième segment (18) présente une largeur supérieure à celle des premier (10) et deuxième (12) segments.

4. Une préforme selon la revendication 1, **caractérisée en ce que** le premier (10) et le deuxième (12) segment s'étendent suivant un arc de près de 360° autour de la bague(4) et se rattachent côte à côte à cette bague (4).

5. Une préforme selon la revendication 1, **caractérisée en ce que** le premier segment (10) s'étend suivant un arc d'environ 175° autour de la bague(4) et se raccorde en U au deuxième segment (12), lequel s'étend en formant un arc d'environ 360° autour de cette bague (4), l'autre extrémité (16) de ce deuxième segment (12) se rattachant à la bague à l'opposé de l'extrémité (14) du premier segment (10).

6. Une préforme suivant l'une quelconque des revendications précédentes **caractérisée en ce qu'**au moins une partie d'un des segments (10, 12, 18) présente une largeur supérieure, de façon à faciliter la préhension.

7. Une préforme suivant l'une quelconque des revendications précédentes **caractérisée en ce que** des différents segments (10, 12, 18) composant la poignée (8) sont reliés les uns aux autres par des liaisons temporaires à faible résistance.

8. Une préforme suivant l'une quelconque des revendications précédentes **caractérisée en ce que** la poignée (8) est réalisée en matériaux plastiques de nature différentes du reste de la préforme.

9. Une méthode de réalisation d'un récipient en matériau plastique bi-orienté avec poignée intégrée, **caractérisée en ce** qu'elle comprend les opérations suivantes :
- Mouler des préformes suivant l'une quelconque des revendications 1 à 7 ;
- Alimenter une machine de moulage-soufflage en préformes ;
- Effectuer un apport thermique à chacune des préformes ;
- Introduire chacune de ces préformes dans un moule en la maintenant par sa bague;
- Fermer chacun de ces moules ;
- Enfoncer un mandrin dans la préforme de façon à la déformer axialement ;
- Raccorder l'embouchure de chacune de ces préformes à une alimentation en gaz sous pression ;
- Déformer radialement la paroi du corps de chacune de ces préformes sous l'effet de la pression et de la chaleur jusqu'à en tapisser la paroi interne du moule ;
- laisser refroidir et démouler le récipient obtenu.

10. Une méthode de réalisation d'un récipient suivant la revendication 9, **caractérisée en ce qu'**elle comprend en outre les opérations suivantes :
- Remplir le récipient et le boucher ;
- Opérer une traction sur un segment externe (10, 12, 18) de la bague (4) du récipient de façon à former une poignée (8).

11. Une méthode de réalisation d'un récipient suivant l'une quelconque des revendications 9 ou 10, **caractérisée en ce que** le moulage de la préforme est réalisé par bi-injection, la poignée étant moulée en un matériau plastique différent du corps de la préforme.

## Patentansprüche

1. Ein Vorformling (1) zur Herstellung eines Behältnisses aus biorientiertem Kunststoff mit einer Einmündung (2), die auf einem Ring (4) montiert ist, die genannte Einmündung ist dazu bestimmt, nach dem Blasverfahren die Mündung des Behältnisses zu bilden und, gegenüber der Mündung (2) ein Röhrenkörper (6), der dazu bestimmt ist, nach dem Dehnen der Körper des Behältnisses zu werden,
**gekennzeichnet dadurch**, dass der Ring (4) dieses Vorformlings (1) ein durchgehendes Band enthält, das so ausgespannt werden kann, dass es einen Griff (8) mit nur einer Schleife für das zukünftige Behältnis bildet, wobei dieses Band mit zwei Enden (14, 16) versehen ist, wobei diese beiden Enden (14, 16) am Ring des Vorformlings (4) befestigt sind, wobei das genannte Band ein erstes Segment (10) umfasst, das am Ring (4) des Vorformlings (1) befestigt ist und sich konzentrisch zu diesem Ring ausdehnt, indem es einen Bogen von mindestens 175° um den Ring bildet und ein zweites Segment (12), das mit dem ersten Segment (10) verbunden ist, im Verhältnis zu diesem ersten Segment (10) zu einem U gebogen ist und sich ausdehnt, indem es einen Bogen von mindestens 175° um diesen Ring (4) bildet, wobei die freien Enden (14, 16) dieses zweiten Segments sich mit dem Ring (4) des Vorformlings (1) verbinden.

2. Ein Vorformling gemäß dem Anspruch 1, **gekennzeichnet dadurch**, dass das erste (10) und das zweite Segment (12) sich einander entgegengesetzt um den Ring (4) in Form eines Bogens von ca. 175° um diesen Ring (4) ausdehnen und sich mittels eines dritten Segments (18) miteinander verbinden, wobei letzteres sich durch Bildung eines Bogens von ungefähr 360° um diesen Ring (4) dehnt und sich U-förmig mit diesem ersten (10) und zweiten (12) Segment verbindet, wobei sich die freien Enden (14, 16) des ersten (10) und zweiten (12) Segments auf der gleichen Seite des Rings (4) des Vorformlings (1) miteinander verbinden.

3. Ein Vorformling gemäß dem Anspruch 2, **gekennzeichnet dadurch**, dass das dritte Segment (18) eine größere Breite als das erste (10) und zweite (12) Segment aufweist.

4. Ein Vorformling gemäß dem Anspruch 1, **gekennzeichnet dadurch**, dass das erste (10) und zweite (12) Segment sich in Form eines Bogens von ca. 360° um den Ring (4) dehnen und sich nebeneinander mit diesem Ring (4) verbinden.

5. Ein Vorformling gemäß dem Anspruch 1, **gekennzeichnet dadurch**, dass das erste Segment (10) sich in Form eines Bogens von ca. 175° um den Ring (4) dehnt und sich U-förmig mit dem zweiten Segment (12) verbindet, das sich durch Bildung eines Bogens von ca. 360° um diesen Ring (4) dehnt, wobei das andere Ende (16) dieses zweiten Segments (12) sich mit dem Ring entgegen dem Ende (14) des ersten Segments (10) verbindet.

6. Ein Vorformling gemäß einem der vorhergehenden Ansprüche, **gekennzeichnet dadurch**, dass mindestens ein Teil eines der Segmente (10, 12, 18) eine größere Breite aufweist, so dass das Greifen erleichtert wird.

7. Ein Vorformling gemäß einem der vorhergehenden Ansprüche, **gekennzeichnet dadurch**, dass die verschiedenen, den Griff (8) bildenden Segmente (10, 12, 18) miteinander durch zeitweilige Verbindungen von geringem Widerstand verbunden sind.

8. Ein Vorformling gemäß einem der vorhergehenden Ansprüche, **gekennzeichnet dadurch**, dass der Griff (8) aus Kunststoffen anderer Art als der Rest des Vorformlings hergestellt wird.

9. Ein Verfahren zur Herstellung eines Behältnisses aus biorientiertem Kunststoff mit eingebundenem Griff, **gekennzeichnet dadurch**, dass es folgende Arbeitsgänge umfasst:
- Formen der Vorformlinge gemäß einem der Ansprüche 1 bis 7;
- Beschicken einer Blasformmaschine mit Vorformlingen;
- Zuführen von Wärme zu jedem Vorformling;
- Einführen jedes Vorformlings in eine Form durch Halten an seinem Ring;
- Schließen jeder dieser Formen;
- Einführen einer Drehspindel in den Vorformling, damit dieser axial verformt wird;
- Anschließen der Mündung jedes dieser Vorformlinge an eine druckbeaufschlagte Gaszufuhr;
- Radiales Verformen der Wand des Körpers jedes dieser Vorformlinge durch den Druck und die Wärme, bis die Innenwand der Form damit bedeckt ist;
- abkühlen lassen und das entstandene Behältnis aus der Form nehmen.

10. Ein Verfahren zur Herstellung eines Behältnisses gemäß dem Anspruch 9, **gekennzeichnet dadurch**, dass es zudem folgende Arbeitsgänge umfasst:
- Füllen und Verschließen des Behältnisses;
- Durchführen einer Zugbeanspruchung an einem externen Segment (10, 12, 18) des Rings (4) des Behältnisses, so dass ein Griff (8) gebildet wird.

11. Ein Verfahren zur Herstellung eines Behältnisses gemäß einem der Ansprüche 9 oder 10, **gekennzeichnet dadurch**, dass die Form des Vorformlings durch BiInjektion hergestellt wird, wobei der Griff aus einem anderen Kunststoffmaterial als der Körper des Vorformlings gebildet wird.

## Claims

1. A pre-form (1) for the making of a biaxially-oriented plastic container comprised of an orifice (2) mounted on a ring (4), the said orifice (2) being intended to form, after inflation, the orifice of the recipient, and, opposite the orifice (2), a tubular body (6) intended to become, after stretching, the body of the container,
**characterised in that** the ring (4) of this preform (1) includes a continuous band likely to be used in order to form a handle (8) with a single ring for the future container, this band having two ends (14, 16), these two ends (14, 16) being fixed to the ring of the preform (4), the said band comprising a first segment (10) connected to the ring (4) of the preform (1) and extending concentrically to this ring forming an arc of at least 175° around the ring and a second segment (12), butted up to the first segment (10), folded in a U-shape in relation to this first segment (10), extending by forming an arc of at least 175° around this ring (4), the free ends (14, 16) of this second segment connecting to the ring (4) of the preform (1).

2. A preform according to claim 1, **characterised in that** the first (10) and the second segment (12) extend opposite each other around the ring (4) following an arc of around 175° around this ring (4) and connect to each other via a third segment (18), which extends by forming an arc of around 360° around this ring (4) and attaches in a U-shape to these first (10) and second (12) segments, the free ends (14, 16) of the first (10) and second (12) segments connecting to the same side of the ring (4) of the preform (1).

3. A preform according to claim 2, **characterised in that** the third segment (18) is wider than the first (10) and second (12) segments.

4. A preform according to claim 1, **characterised in that** the first (10) and the second (12) segment extend along an arc of nearly 360° around the ring (4) and attach side by side to this ring (4).

5. A preform according to claim 1, **characterised in that** the first segment (10) extends along an arc or approximately 175° around the ring (4) and connects in a U-shape to the second segment (12), which extends by forming an arc of approximately 360° around this ring (4), the other end (16) of this second segment (12) attaching to the ring opposite the end (14) of the first segment (10).

6. A preform according to one of the previous claims **characterised in that** at least one part of one of the segments (10, 12, 18) is wider , in order to facilitate grip.

7. A preform according to any one of the previous claims **characterised in that** different segments (10, 12, 18) making up the handle (8) are connected to each other by temporary low-resistance connectors.

8. A preform according to any one of the previous claims, **characterised in that** the handle (8) is made of plastic material of a different kind from the rest of the preform.

9. A method for producing a container made of biaxially oriented plastic material with a built-in handle, **characterised in that** it includes the following operations:
- Moulding the preforms according to any one of claims 1 to 7;
- Feeding a blow-moulding machine with preforms;
- Supplying heat to each of the preforms;
- Introducing each of these preforms into a mould by holding it by its handle;
- Closing each of these moulds;
- Recessing a chuck into the preform in order to deform it axially;
- Connecting the orifice of each of these preforms to a pressurised gas feed;
- Deforming the wall of the body of each of these preforms radially under the effect of the pressure and heat until it lines the internal wall of the mould;
- Allow the container obtained to be cooled and removed from the mould.

10. A method for producing a container according to claim 9, **characterised in that** it includes in addition the following operations:
- Filling the container and plugging it;
- Performing a pulling movement on an external segment (10, 12, 18) of the ring (4) of the container in order to form a handle (8).

11. A method for producing a container according to any one of claims 9 or 10, **characterised in that** the moulding of the preform is carried out by dual injection, the handle being moulded from a plastic material different from the body of the preform.
